# FASCICULE DE BREVET EUROPEEN

(11) **EP 4 608 615 B1**
(45) Date de publication et mention de la délivrance du brevet: **14.10.2026**
(21) Numéro de dépôt: 23794403.8
(22) Date de dépôt: 25.10.2023
(51) Int. Cl.: B25J 13/02, B25J 13/06

(54) **DISPOSITIF DE COMMANDE ERGONOMIQUE**
ERGONOMISCHE STEUERVORRICHTUNG
ERGONOMIC CONTROL DEVICE

(30) Priorité: 28.10.2022 FR 2211278
(43) Date de publication de la demande: 03.09.2025
(73) Titulaire: Commissariat à l'Energie Atomique et aux Energies Alternatives, 75015 Paris (FR)
(72) Inventeur: DE-GRANDE, Henry-Noël, 30130 Pont Saint Esprit (FR); CONTY, Pascal, 30130 Saint Alexandre (FR)
(74) Mandataire: Ipsilon
(86) Numéro de dépôt international: PCT/EP2023/079807
(87) Numéro de publication internationale: WO 2024/089118

(56) Documents cités:
- EP-B1- 3 558 602
- WO-A1-2021/102506
- US-A1- 2016 297 076
- US-A1- 2018 345 505
- US-B2- 10 780 587

## Description

### Domaine technique

La présente invention concerne la commande de télémanipulateurs, notamment de télémanipulateurs de paroi, en particulier par une poignée de commande. Un télémanipulateur est entrainé en mouvement au moyen de moteurs électriques commandés depuis un dispositif de commande comportant un boitier de commande placé sur une poignée de commande.

### Technique antérieure

Le signal électrique qui commande le ou les moteurs transite par un câble électrique entre le boitier de commande de la poignée du télémanipulateur et un coffret de puissance des actionneurs des moteurs. Ce câble électrique est situé dans le champ opératoire de l'utilisateur, pouvant occasionner des gènes à la manipulation du télémanipulateur et des coincements, avec un risque de détérioration du fait que le câble électrique doit rester libre dans l'espace pour pouvoir suivre les actions demandées par l'utilisateur. Il existe un risque que le câble soit bloqué, détérioré ou arraché.

Afin d'assurer la sécurité et pour éviter la détérioration de la gaine protectrice du câble électrique, il est connu de le protéger par une enveloppe en plastique, par exemple une gaine en spirale.

A ce jour, l'utilisateur doit porter une attention particulière à ce câble en prenant soin de ne pas l'enrouler par inadvertance autour de la poignée. Ainsi, l'utilisateur doit s'adapter à la poignée au détriment de sa dextérité. En effet, la manipulation de la poignée peut être bloquée par la tension du câble.

De plus, lors de manœuvres spécifiques, l'utilisateur peut ne pas avoir de vision suffisante du boitier de commande. Certains repères présents sur ce boitier peuvent notamment ne pas être visibles. Souvent, l'utilisateur peut avoir à se mettre dans des positions inadaptées, telles qu'avec la tête à l'envers ou accroupi, afin de réussir à entrevoir le boîtier de commande.

Enfin, aucune interchangeabilité rapide de boitier de commande n'est possible entre plusieurs télémanipulateurs de paroi, par exemple si l'un d'entre eux venait à tomber en panne. En effet, les boitiers de commande filaires restent à demeure sur les poignées. Ils ne sont pas séparables. Aussi, une utilisation non contrôlée de l'équipement peut avoir lieu.

Il existe donc un besoin pour remédier à tout ou partie de ces inconvénients.

### Résumé de l'invention

L'invention a ainsi pour objet, selon l'un de ses aspects, un dispositif de commande ergonomique, notamment pour un télémanipulateur de paroi, comportant :
- une poignée de commande,
- un boitier de commande comportant un ou plusieurs organes de commande pour commander un ou des moteurs, notamment du télémanipulateur de paroi,
le boitier de commande étant monté sur la poignée de commande, étant mobile par rapport à celle-ci avec au moins deux degrés de liberté, voire trois degrés de liberté, le boitier de commande (10) étant monté sur une bague tournante (15) montée en rotation sur la poignée de commande (5) et/ou le boitier de commande (10) étant montée avec une liaison rotule sur la poignée de commande (5)

Grâce à l'invention le boitier de commande est mobile par rapport à la poignée de commande, étant orientable à souhait par l'utilisateur, ce qui permet d'améliorer sa visibilité par l'utilisateur et de faciliter les manipulations de celui-ci.

### Exposé de l'invention

Le boitier de commande peut être dépourvu de liaison filaire.

Le boitier de commande peut notamment être dépourvu de liaison filaire avec le ou les moteurs à commander. Le boitier de commande peut être en communication avec le ou les moteurs à commander par une liaison non filaire. Cela permet avantageusement d'éviter la présence d'un fil autour du boitier de commande, qui pourrait gêner le déplacement de celui-ci par rapport à la poignée de commande. Le mouvement du boitier de commande en est ainsi facilité. Il n'y a pas de fil ou câble électrique dans le champ opératoire de l'utilisateur, ce qui permet d'améliorer la sécurité de l'utilisateur et de faciliter ses manipulations. En effet, on évite ainsi tout risque de contact de l'utilisateur avec un câble électrique dénudé sous tension.

L'absence de câble électrique permet également d'éviter tout risque d'enroulement non souhaité du câble autour de la poignée de commande, et/ou d'arrachement de câble. On supprime également ainsi tout risque de panne électrique provenant de la présence d'un câble électrique, tel que par exemple pincement du câble, déconnexion inopinée ou autre.

Avantageusement, le boitier de commande peut également être séparé de la poignée de commande, et être utilisé avec une autre poignée de commande. Cette interchangeabilité permet de gagner en réactivité en cas de panne d'un boitier de commande.

Le dispositif peut être configuré pour que le boitier de commande soit mobile entre deux positions symétriques l'une de l'autre par rapport à la poignée de commande.

Ainsi, le dispositif est ambidextre pour l'utilisateur. Il est aussi pratique à utiliser, que l'utilisateur le manipule de la main droite ou de la main gauche, et qu'il soit droitier ou gaucher. Cela peut permettre d'améliorer la précision de la commande, et également permettre un gain de coût à l'achat.

L'utilisateur peut manipuler le boitier de façon à l'avoir toujours sous les yeux et dans le bon sens, quelle que soit sa position, en fonction de ses manipulations. L'ergonomie du pilotage du dispositif de commande en est améliorée. Le confort d'utilisation est également amélioré, de même que la sécurité des utilisateurs et la sûreté. Le risque d'erreur humaine dû à une mauvaise lecture est minimisé.

Le boitier de commande peut être orienté par rapport à la poignée de commande suivant toutes les directions.

La bague tournante peut s'étendre sur moins de 360°, par exemple moins de 320°, mieux moins de 240°, voire moins de 200°, par exemple sur 180° environ. On peut parler de demi-bague tournante.

Ainsi, la bague tournante peut tourner autour de la poignée de commande, notamment sur plus 120°, voire plus de 180°, mieux plus de 240°, voire plus de 300°, mieux plus de 320°, notamment sur environ 360°. Le boitier de commande peut ainsi être entrainé en rotation tout autour de la poignée de commande.

L'utilisateur peut ainsi positionner le boitier de commande comme il le souhaite, de façon à ce que celui-ci lui soit toujours visible.

Le dispositif peut comporter une bague fixe montée fixement sur la poignée de commande. La bague tournante peut être montée sur la bague fixe de la poignée de commande. La bague tournante peut se clipser et se déclipser aisément de la bague fixe.

La bague fixe peut être percée et la bague tournante étant montée avec un axe à rappel dans le perçage de la bague fixe. Le dispositif peut comporter un ressort pour permettre le rappel. Le ressort de rappel peut permettre de verrouiller et déverrouiller aisément la bague tournante. Ainsi, le boitier de commande peut tourner tout autour de son axe qui le relie à la bague tournante.

En variante ou additionnellement, le boitier de commande peut être montée avec une liaison rotule sur la poignée de commande, ou encore par le biais d'une liaison aimantée.

Le boitier de commande peut être détachable de la poignée de commande. Le boitier de commande est en particulier monté de manière amovible sur la poignée de commande. Cela permet à l'utilisateur de retirer le boitier de commande du dispositif en fin d'utilisation, notamment en fin de poste, et ainsi de sécuriser le ou les télémanipulateurs en les rendant inutilisables. Le télémanipulateur ne risque pas d'être manipulé accidentellement ou de manière incontrôlée.

En outre, cela peut permettre une interchangeabilité aisée et rapide des boitiers de commande, par exemple dans le cas où un boitier de commande tombe en panne, notamment dans le cas où il y a plusieurs télémanipulateurs de paroi avec plusieurs boitiers de commande. Un boitier de commande peut être utilisé pour commander n'importe quels moteurs.

Le boitier de commande peut comporter une pluralité d'organes de commandes, notamment deux organes de commandes par moteurs à commander, notamment six organes de commandes.

Le boitier de commande peut être configuré pour commander un ou plusieurs moteurs, par exemple un, deux ou trois moteurs. Chaque moteur peut être configuré pour commander le mouvement du télémanipulateur de paroi selon un degré de liberté. Il peut notamment y avoir un moteur par axe de déplacement du télémanipulateur de paroi.

La poignée de commande peut comporter un levier, permettant la fermeture de la pince du bras esclave

Le dispositif peut comporter un indicateur, notamment un indicateur lumineux, de l'organe de commande sélectionné. Cet indicateur permet de faciliter la lecture du boitier de commande par l'utilisateur. Il permet notamment de connaitre l'axe de déplacement du télémanipulateur de paroi sélectionné. Il peut nécessiter l'intégration d'une ou plusieurs piles dans le boitier de commande.

Au moins un organe de commande, voire tous les organes de commande, peuvent être tactiles. Cela permet de bénéficier d'un boitier de commande moderne et ergonomique, et de faciliter la lecture du boitier de commande par l'utilisateur. Il permet notamment de connaitre l'axe de déplacement du télémanipulateur de paroi sélectionné. Il peut nécessiter l'intégration d'une ou plusieurs piles dans le boitier de commande.

En variante, ils peuvent ne pas être tactiles.

Au moins un organe de commande, voire tous les organes de commande, peuvent être tactiles avec un retour vocal ou sonore. Une telle configuration peut permettre aux utilisateurs de connaitre l'axe de déplacement du télémanipulateur de paroi sélectionné. Il peut nécessiter l'intégration d'une ou plusieurs piles dans le boitier de commande.

Dans un mode de réalisation, le boitier de commande peut être dépourvu de piles pour son alimentation électrique.

Dans un mode de réalisation, le boitier de commande peut être équipé d'une liaison aimantée sur toute sa surface, permettant sa fixation sur un support métallique déporté.

L'invention a encore pour objet, indépendamment ou en combinaison avec ce qui précède, un télémanipulateur de paroi comportant un dispositif de commande tel que décrit ci-dessus.

Le télémanipulateur de paroi peut comporter un boitier relais configuré pour recevoir des signaux de commande du boitier de commande. Le boitier relais peut être relié par liaison filaire avec le ou les moteurs du télémanipulateur.

Le télémanipulateur de paroi peut être utilisé pour tout secteur d'application, tel que par exemple nucléaire, pharmaceutique, chimique, ou encore spatial, cette liste n'étant pas limitative.

### Brève description des dessins

L'invention pourra être mieux comprise à la lecture de la description détaillée qui va suivre, d'exemples de mise en œuvre non limitatifs de celle-ci, et à l'examen du dessin annexé, sur lequel :
[Fig 1] La figure 1 est une vue en perspective d'un dispositif de commande selon l'invention.
[Fig 2] La figure 2 illustre le dispositif de commande de la figure 1 dans différentes positions.
[Fig 3] La figure 3 est une vue de détails en éclaté du dispositif de commande de la figure 1.
[fig 4] La figure 4 illustre le fonctionnement de la commande de l'axe X d'un télémanipulateur de paroi selon l'invention.

### Description détaillée

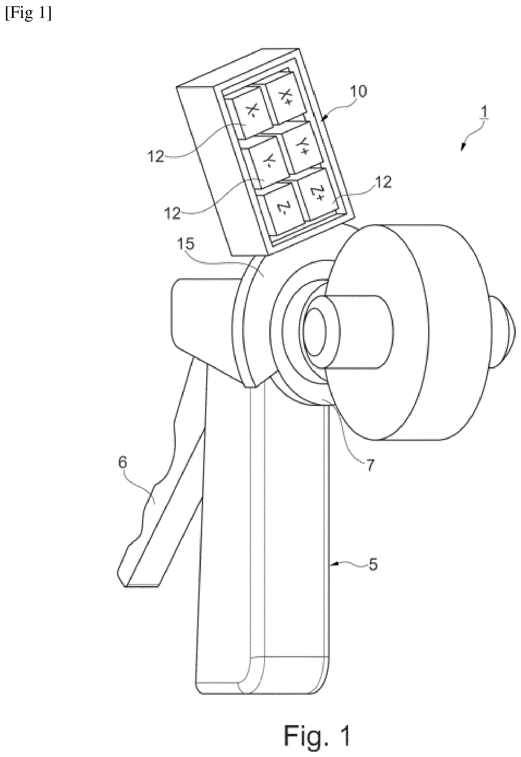

On a illustré à la figure 1 un dispositif de commande ergonomique 1 pour un télémanipulateur de paroi. Le dispositif de commande ergonomique 1 comporte une poignée de commande 5 et un boitier de commande 10 comportant plusieurs organes de commande 12 pour commander un ou des moteurs du télémanipulateur de paroi.

La poignée de commande comporte un levier 6, qui permet de commander de manière mécanique la fermeture de la pince côté bras esclave.

Le boitier de commande est configuré dans l'exemple décrit pour commander trois moteurs. Chaque moteur est configuré pour commander le mouvement du télémanipulateur de paroi selon un degré de liberté. Il y a notamment un moteur par axe de déplacement du télémanipulateur de paroi. Les axes sont ici indiqués par X, Y et Z.

Le boitier de commande comporter ainsi six organes de commandes 12, avec deux organes de commandes par moteurs à commander, les organes de commandes étant ainsi désignés X+, X-, Y+, Y-, Z+ et Z-.

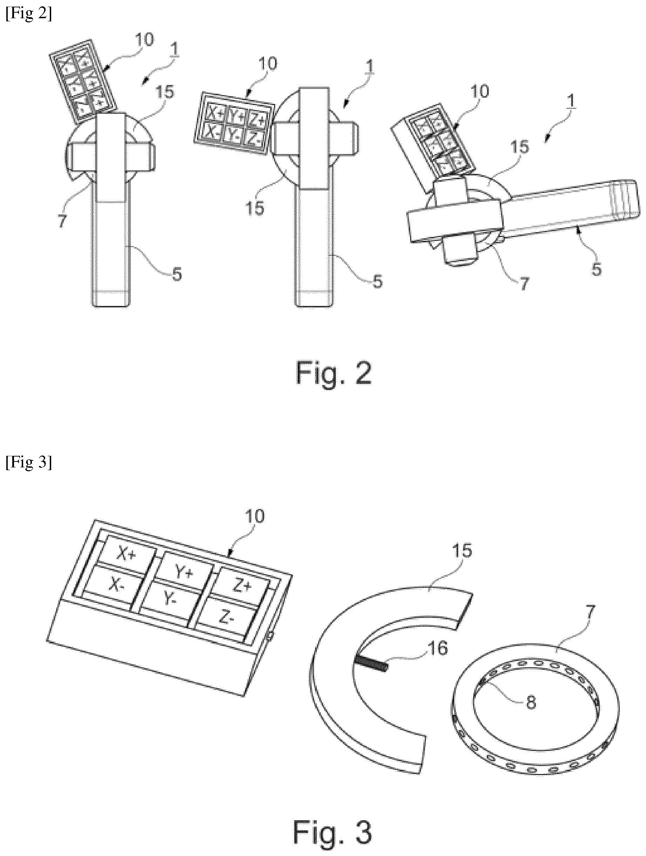

Le boitier de commande 10 est monté sur la poignée de commande 5, étant mobile par rapport à celle-ci avec plusieurs degrés de liberté, comme décrit ci-après. Ainsi, le boitier de commande est mobile par rapport à la poignée de commande, étant orientable à souhait par l'utilisateur, comme visible sur la figure 2, ce qui permet d'améliorer sa visibilité par l'utilisateur et de faciliter les manipulations de celui-ci.

Par ailleurs, le télémanipulateur de paroi comporte un boitier relais configuré pour recevoir les signaux de commande du boitier de commande. Le boitier relais peut être relié par liaison filaire avec les moteurs du télémanipulateur.

Le boitier de commande 10 est dépourvu de liaison filaire, en particulier avec les moteurs à commander. Le boitier de commande est ici en communication avec le ou les moteurs à commander par une liaison non filaire. Cela permet avantageusement d'éviter la présence d'un fil autour du boitier de commande, qui pourrait gêner le déplacement de celui-ci par rapport à la poignée de commande.

Le boitier de commande est également dépourvu de piles pour son alimentation électrique.

Le dispositif est configuré pour que le boitier de commande soit mobile entre deux positions symétriques l'une de l'autre par rapport à la poignée de commande. On voit que le dispositif est ambidextre pour l'utilisateur. L'utilisateur peut manipuler le boitier de façon à l'avoir toujours sous les yeux et dans le bon sens, quelle que soit sa position, en fonction de ses manipulations.

Le boitier de commande 10 peut être orienté par rapport à la poignée de commande suivant toutes les directions. A cet effet, le boitier de commande 10 est monté sur une bague tournante 15 montée en rotation sur la poignée de commande 5. La bague tournante 15 s'étend dans cet exemple sur 180° environ. On peut parler de demi-bague tournante. Ainsi, la demi-bague tournante 15 peut tourner autour de la poignée de commande sur environ 360°. Le boitier de commande peut ainsi être entrainé en rotation tout autour de la poignée de commande.

En outre, le dispositif comporte une bague fixe 7 montée fixement sur la poignée de commande 5. La bague tournante 15 est montée sur la bague fixe 7 de la poignée de commande 5. La bague tournante 15 peut se clipser et se déclipser aisément de la bague fixe 7.

La bague fixe 7 est percée et la bague tournante 15 est montée avec un axe à rappel 16 dans le perçage 8 de la bague fixe, comme visible sur la figure 3. Le dispositif comporte un ressort pour permettre le rappel. Le ressort de rappel peut permettre de verrouiller et déverrouiller aisément la bague tournante 15.

Par ailleurs, le boitier de commande 10 est détachable de la poignée de commande 5. Le boitier de commande 10 est en effet monté de manière amovible sur la poignée de commande 5.

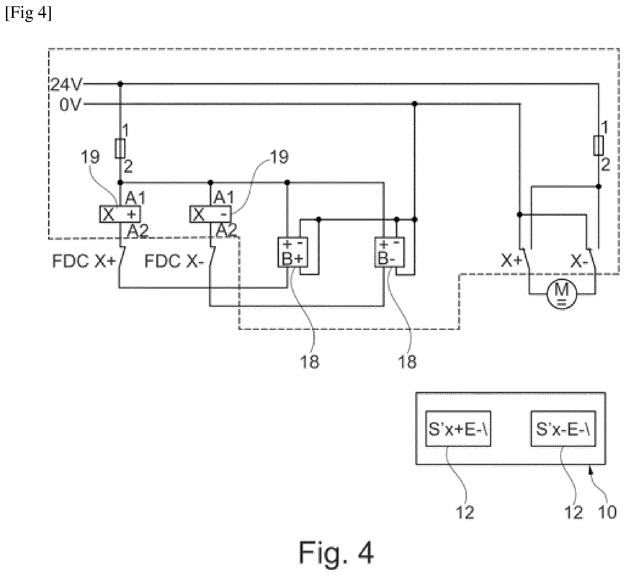

On va maintenant décrire la commande de l'axe X d'un télémanipulateur de paroi modèle GETINGE LA CALHENE MT 200, en référence à la figure 4. Le principe de fonctionnement est le suivant.

Un appui sur le bouton « S'X + » de la poignée de commande 5 envoie un signal au relais à commande 18 sans fil « B + » qui, à la fermeture de son contact sec interne, permet l'alimentation du relais 19 « X+ ».

Le contact du relais 19 « X+ » permet au moteur M d'être alimenté. Il tourne dans un sens.

Inversement, lorsque le contact « S'X - » est activé, le moteur M tourne dans l'autre sens.

## Revendications

1. Dispositif de commande (1) ergonomique, notamment pour un télémanipulateur de paroi, comportant :
- une poignée de commande (5),
- un boitier de commande (10) comportant un ou plusieurs organes de commande (12) pour commander un ou des moteurs (M), notamment du télémanipulateur de paroi,
**caractérisé en ce que**
le boitier de commande (10) étant monté sur la poignée de commande (5), étant mobile par rapport à celle-ci avec au moins deux degrés de liberté, voire trois degrés de liberté, le boitier de commande (10) étant monté sur une bague tournante (15) montée en rotation sur la poignée de commande (5) et/ou le boitier de commande (10) étant montée avec une liaison rotule sur la poignée de commande (5).

2. Dispositif de commande selon la revendication précédente, le boitier de commande (10) étant dépourvu de liaison filaire.

3. Dispositif de commande selon l'une des revendications précédentes, étant configuré pour que le boitier de commande (10) soit mobile entre deux positions symétriques l'une de l'autre par rapport à la poignée de commande.

4. Dispositif de commande selon l'une des revendications précédentes, comportant une bague fixe (7) montée fixement sur la poignée de commande (5).

5. Dispositif de commande selon la revendication précédente, la bague tournante (15) étant montée sur la bague fixe (7) de la poignée de commande (5).

6. Dispositif de commande selon la revendication précédente, la bague fixe (7) étant percée et la bague tournante (15) étant montée avec un axe à rappel (16) dans le perçage de la bague fixe.

7. Dispositif de commande selon l'une des revendications précédentes, le boitier de commande (10) étant détachable de la poignée de commande (5).

8. Dispositif de commande selon l'une des revendications précédentes, comportant un indicateur, notamment un indicateur lumineux, de l'organe de commande (12) sélectionné.

9. Dispositif de commande selon l'une des revendications précédentes, au moins un organe de commande (12), voire tous les organes de commande (12), étant tactiles.

10. Dispositif de commande selon la revendication précédente, au moins un organe de commande (12), voire tous les organes de commande (12), étant tactiles avec un retour vocal ou sonore.

11. Dispositif de commande selon l'une des revendications précédentes, le boitier de commande (10) étant dépourvu de piles pour son alimentation électrique.

12. Dispositif de commande selon l'une des revendications précédentes, le boitier de commande (10) étant équipé d'une liaison aimantée sur toute sa surface, permettant sa fixation sur un support métallique déporté.

13. Télémanipulateur de paroi comportant un dispositif de commande (1) selon l'une quelconque des revendications précédentes.

14. Télémanipulateur de paroi selon la revendication précédente, comportant un boitier relais configuré pour recevoir des signaux de commande du boitier de commande (10).

## Patentansprüche

1. Ergonomische Steuervorrichtung (1), insbesondere für einen Wand-Fernmanipulator, mit:
- einem Steuergriff (5),
- einem Steuerkasten (10) mit einem oder mehreren Steuerelementen (12) zur Steuerung eines oder mehrerer Motoren (M), insbesondere des Wand-Fernmanipulators,
**dadurch gekennzeichnet, dass**:
der Steuerkasten (10) am Steuergriff (5) angebracht ist und relativ zu diesem mit mindestens zwei Freiheitsgraden bzw. drei Freiheitsgraden beweglich ist,
der Steuerkasten (10) an einem drehbaren Ring (15) angebracht ist, der drehbar am Steuergriff (5) angebracht ist, und/oder der Steuerkasten (10) über eine Kugelgelenkverbindung am Steuergriff (5) angebracht ist.

2. Steuervorrichtung nach dem vorhergehenden Anspruch, wobei der Steuerkasten (10) keine kabelgebundene Verbindung aufweist.

3. Steuervorrichtung nach einem der vorhergehenden Ansprüche, die so ausgelegt ist, dass der Steuerkasten (10) zwischen zwei Positionen bewegbar ist, die in Bezug auf den Steuergriff symmetrisch zueinander liegen.

4. Steuervorrichtung nach einem der vorhergehenden Ansprüche mit einem feststehenden Ring (7), der fest am Steuergriff (5) angebracht ist.

5. Steuervorrichtung nach dem vorhergehenden Anspruch, wobei der drehbare Ring (15) am feststehenden Ring (7) des Steuergriffs (5) angebracht ist.

6. Steuervorrichtung nach dem vorhergehenden Anspruch, wobei der feststehende Ring (7) eine Bohrung aufweist und der drehbare Ring (15) mit einer Rückstellachse (16) in der Bohrung des feststehenden Rings gelagert ist.

7. Steuervorrichtung nach einem der vorhergehenden Ansprüche, wobei der Steuerkasten (10) vom Steuergriff (5) abnehmbar ist.

8. Steuereinrichtung nach einem der vorhergehenden Ansprüche mit einer Anzeige, insbesondere einer Leuchtanzeige, für das ausgewählte Steuerelement (12).

9. Steuervorrichtung nach einem der vorhergehenden Ansprüche, wobei mindestens ein Steuerelement (12) oder sogar alle Steuerelemente (12) berührungsempfindlich sind.

10. Steuervorrichtung nach dem vorhergehenden Anspruch, wobei mindestens ein Steuerelement (12) oder sogar alle Steuerelemente (12) berührungsempfindlich sind und eine Sprach- oder akustische Rückmeldung geben.

11. Steuereinrichtung nach einem der vorhergehenden Ansprüche, wobei der Steuerkasten (10) keine Batterien zur Stromversorgung enthält.

12. Steuervorrichtung nach einem der vorhergehenden Ansprüche, wobei der Steuerkasten (10) mit einer vollflächigen Magnetverbindung ausgestattet ist, die seine Befestigung an einem abgesetzten Metallträger ermöglicht.

13. Wand-Fernmanipulator mit einer Steuervorrichtung (1) gemäß einem der vorhergehenden Ansprüche.

14. Wand-Fernmanipulator nach dem vorhergehenden Anspruch mit einem Relaiskasten, der zur Aufnahme von Steuersignalen aus dem Steuerkasten (10) ausgelegt ist.

## Claims

1. Ergonomic control device (1), notably for a wall telemanipulator, comprising:
- a control handle (5);
- a control unit (10) comprising one or more control components (12) for controlling one or more motors (M), notably of the wall telemanipulator;
**characterized in that**
the control unit (10) being mounted on the control handle (5), being movable relative thereto with at least two degrees of freedom, or even three degrees of freedom,
the control unit (10) being mounted on a rotary ring (15) rotatably mounted on the control handle (5) and/or the control unit (10) being mounted with a ball joint on the control handle (5).

2. Control device according to the preceding claim, the control unit (10) being devoid of a wired link.

3. Control device according to any of the preceding claims, being configured so that the control unit (10) is movable between two positions symmetrical to each other relative to the control handle.

4. Control device according to any of the preceding claims, comprising a fixed ring (7) fixedly mounted on the control handle (5).

5. Control device according to the preceding claim, the rotary ring (15) being mounted on the fixed ring (7) of the control handle (5).

6. Control device according to the preceding claim, the fixed ring (7) being perforated and the rotary ring (15) being mounted with a return pin (16) in the perforation of the fixed ring.

7. Control device according to any of the preceding claims, the control unit (10) being detachable from the control handle (5).

8. Control device according to any of the preceding claims, comprising an indicator, notably a light indicator, for the selected control component (12).

9. Control device according to any of the preceding claims, at least one control component (12), or even all the control components (12), being tactile.

10. Control device according to the preceding claim, at least one control component (12), or even all the control components (12), being tactile with voice or sound feedback.

11. Control device according to any of the preceding claims, the control unit (10) being devoid of batteries for its power supply.

12. Control device according to any of the preceding claims, the control unit (10) being equipped with a magnetized connection over its entire surface, allowing it to be fixed on a remote metal support.

13. Wall telemanipulator comprising a control device (1) according to any one of the preceding claims.

14. Wall telemanipulator according to the preceding claim, comprising a relay unit configured to receive control signals from the control unit (10).
